# EUROPEAN PATENT SPECIFICATION

(11) **EP 1 584 566 B1**
(45) Date of publication and mention of the grant of the patent: **30.12.2009**
(21) Application number: 05388020.9
(22) Date of filing: 08.03.2005
(51) Int. Cl.: B65D 8/10, B65D 25/32, B65D 1/46

(54) **Plastic container with annular collar and method of its manufacture**
Kunststoffbehälter mit Ringvorrichtung und Verfahren zu dessen Herstellung
Récipient en matière plastique avec collier annulaire et son procédé de fabrication

(30) Priority: 09.03.2004 DK 200400387
(43) Date of publication of application: 12.10.2005
(73) Proprietor: Superfos A/S, 2630 Taastrup (DK)
(72) Inventor: Pudselykke, Lars, 4300 Holbaek (DK)
(74) Representative: Sundien, Thomas

(56) References cited:
- EP-A- 0 870 690
- WO-A-87/07578
- WO-A-90/11229
- GB-A- 2 307 462
- US-A- 5 069 736
- US-A- 5 964 372

## Description

The present invention relates to a two-part receptacle comprising a plastic container with a bottom and an peripheral sidewall defining the axial expanse of the container and having, opposite the bottom, a mouth and an external skirt, and a separate round-going plastic collar for fixing externally on the container at the mouth.

US patent no. 5 964 372 discloses a plastic container that has an external skirt and a lid that covers ribs between the skirt and the container wall.

WO 90/11229 discloses a two-part receptable comprising a plastic container and an attached plastic collar.

It is a problem of the known receptacles that the relatively thin and sharp ribs that are typically arranged interiorly of the container skirt to impart a certain degree of rigidity thereto can be perceived as unpleasant if the user inadvertently introduces his fingers underneath such skirt. In those cases where the skirt also forms an upwardly open recess small amounts of the product to be contained in the plastics container may collect in that recess during the filling operation. In case a foodstuff product is concerned, there may thus in some cases be basis for bacteria growth. Moreover the problem also occurs in the context of the known receptacles that only by means of complex moulding technology is it possible to manufacture them with a visual appearance which is desirable in some cases and featuring a distinctly round-going and bead-like outwardly closed protrusion near the free edge of the receptacle, and it is particularly difficult to manufacture such round-going protrusion in a colour that differs from that of the remainder of the receptacle. It is also a problem of the known receptacles that they have determined strength properties that cannot be varied in accordance with the actual use of the container.

The above-mentioned problems may be solved in accordance with the invention by a separate collar comprising a wall that makes it difficult or impossible for a user to insert his finger underneath said skirt and which can be fixed externally on the container. Advantageous embodiments will appear from the dependent claims. The invention also enables a simple way in which to manufacture the skirt with a colour that differs from that of the remainder of the container.

Moreover the invention relates to a method of manufacturing the two-part receptacle. By the invention it is thus possible in a simple manner to manufacture receptacles having different properties by means of one single injection mould featuring a cavity for the collar and a separate cavity for the container since - if plastic is injected to the collar cavity - it is desired to form a collar that will, in the discharge process, automatically be taken to the correct position in engagement with the container. A container with the collar may exhibit a higher degree of resistance to deformations that the same container without the collar, and it will also be possible by use of the collar to mount an handle with a point of rotation that differs from the point of rotation usually determined by the container.

Now follows an explanation of a preferred embodiment of the invention, wherein reference is made to the drawing.
Figure 1a is a perspective view of a receptacle formed from a container and collar according to the invention, featuring a lid;
Figure 1b shows the receptacle shown in Figure 1, seen from the side and without lid;
Figure 2a is a perspective view of a collar;
Figure 2b is a perspective view of a container for use in combination with the collar shown in Figure 2a;
Figures 3a and 3b are perspective views, seen from above and from below, respectively, of the container while the collar is being mounted.

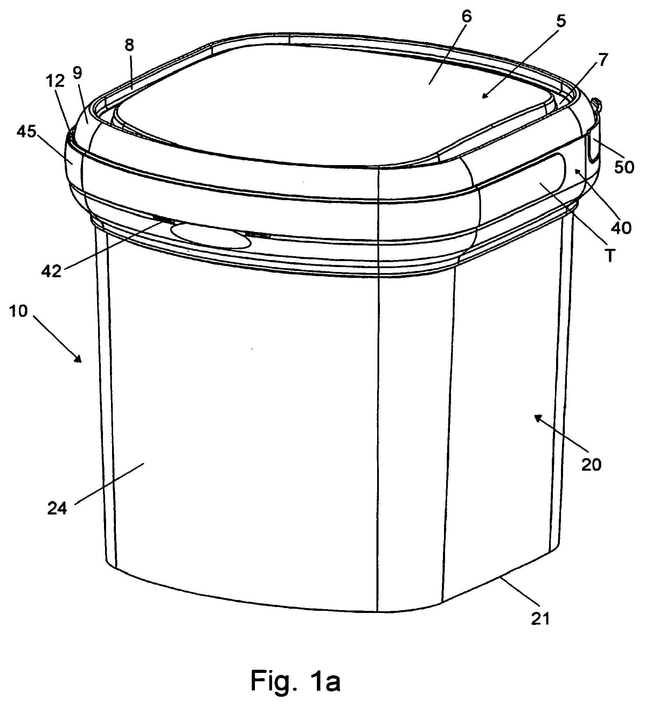

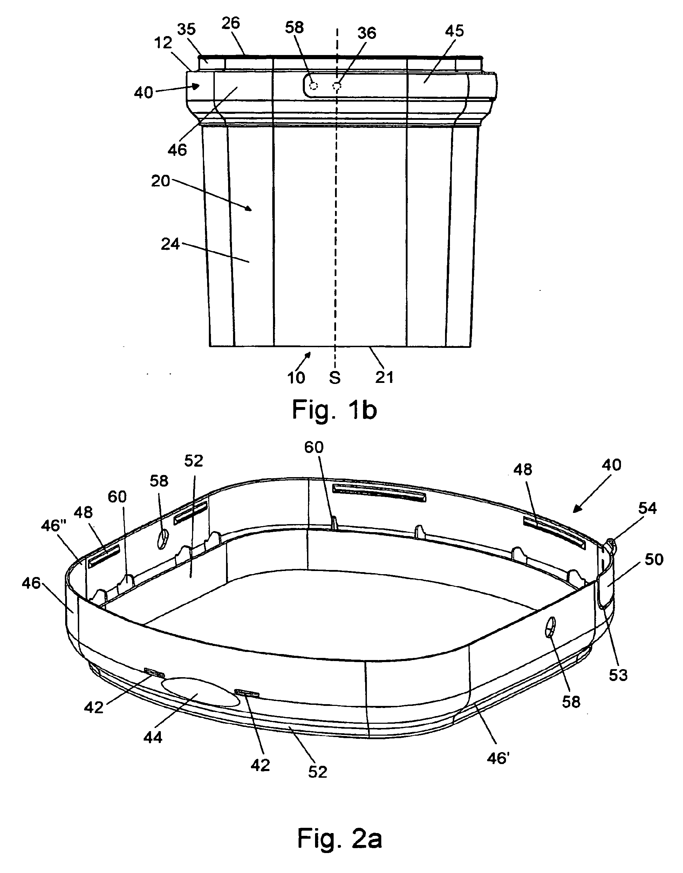

In Figure 1 a the reference numeral 10 is used to designate a plastic receptacle being, at the top, provided with a lid 5 which is also made of plastic. The receptacle 10 can be used for transporting and storing various products, such as paint or foodstuffs, and may have an exemplary volume of between 1 and 5 litres.

The receptacle 10 is formed from a set consisting of a plastic container 20 and a separate plastic collar 40 that are joined. This is the assembly that constitutes the present invention.

As shown in Figure 1b, the receptacle 10 has a bottom 21, from where a peripheral wall 24 extends that is, opposite the bottom 21, provided with a free edge 26 that has a bead and defines the mouthing of the receptacle 10. The receptacle 10 may appear with pairs of opposed vertical sides as shown in the drawing, or the receptacle 10 may be cylindrical or frustoconical. In Figure 1b, a vertical line S is indicated that represents a plane through the point of gravity of the receptacle 10. The line S also represents the direction of the axial expanse of the receptacle 10.

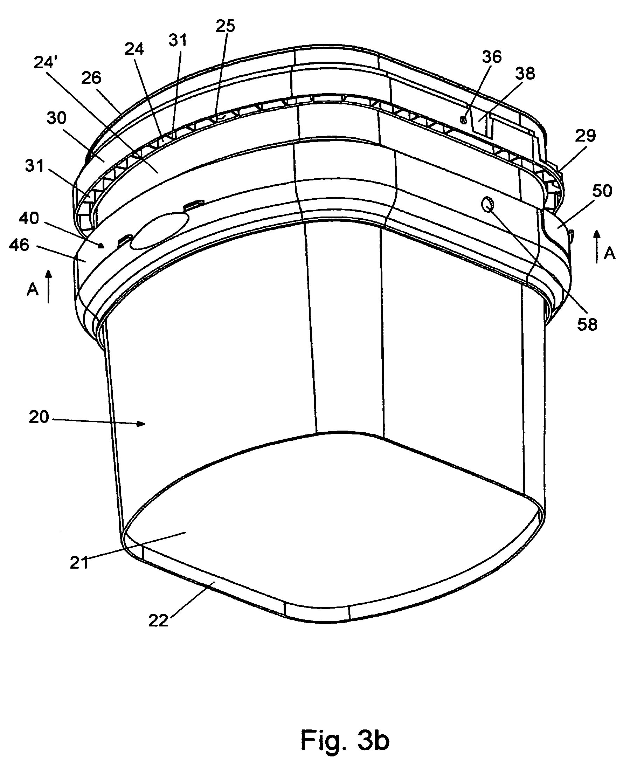

Figure 1 a shows how a lid 5 for the receptacle 10 may advantageously be configured with a central area 6 that may be planar or vaulted. On the top face the lid 5 has a peripherally extending depression 7 that is delimited by the central area 6 and by a peripherally extending wall 8. The depression 7 serves to stabilise and centre a stack of receptacles 10 with the lid 5; ie for receiving the lowermost edge 22 (see Figure 3b) on a corresponding receptacle 10. The lid 5 is provided with a peripherally extending skirt formed by a wall 9 which is approximately in parallel with the wall 8. Between the wall 9 and the wall 8, a round-going passage is conventionally defined on the underside of the lid 5. When the lid 5 is arranged on the receptacle 10 and the free edge 26 of the receptacle 10 is conveyed into said peripherally extending passage, the bead on the free edge 26 may snap-engage with the lid 5 in an entirely conventional manner.

In Figures 1 a and 1 b it is also shown that near its free edge 26 the receptacle 10 has a peripherally extending bead-like skirt comprising a wall 46 that extends at a distance of eg 5-15 mm from the wall 24. The skirt delimits a closed passage that extends all the way around the outside of the receptacle wall 24. At the top part of the skirt, between the wall 46 and the receptacle wall 24, an upwardly open groove 12 is preferably formed that has a relatively small depth. The lower edge of the wall 9 of the lid 5 may protrude into that groove 12 in order to become difficult to access, meaning that the lid 5 cannot readily be removed from the receptacle 10. Moreover Figure 1 a shows that the wall 46 may comprise a strip-shaped portion 50 which is readily separable from the remainder of the wall 46. When the user removes that portion 50 it is possible, in a conventional manner, to apply an upwards pressure with one's finger onto the lower edge of the wall 9 of the lid 5 and hence to release the lid 5 from its snap-engagement with the bead on the free edge 26 of the receptacle.

The receptacle 10 also features a U-shaped handle 45, shown in the drawing in a downwardly position and having, at the ends, a hinge pin T (not shown) that extends into an opening 58 in the wall 46. The handle 45 may be of metal, but preferably it is manufactured by injection moulding, simultaneously for example, with the collar 40. Thus, an integrally formed connection between the wall 46 and the pin T may be created that is broken the first time the handle 45 is manipulated. The opening 58 in the wall 46 may, as shown in Figure 1b, be arranged offset relative to the line S, ie relative to the point of gravity of the container 10. Thereby the receptacle 10 will be caused to tilt when the user lifts it by means of the handle 45, which may facilitate emptying of the receptacle 10 of its contents or introduction of a paintbrush into the receptacle 10 in those cases where the receptacle 10 is used, for example, for paint. It will further appear from Figure 1 a that the wall 46 may comprise abutment areas 42 to prevent the handle 45 from being turned readily downwards relative to the position shown in Figure 1 a. A small depression 44 (see Figure 2a) makes it easier for the user to seize the front of the handle 45 when the handle 45 is to be tilted upwards.

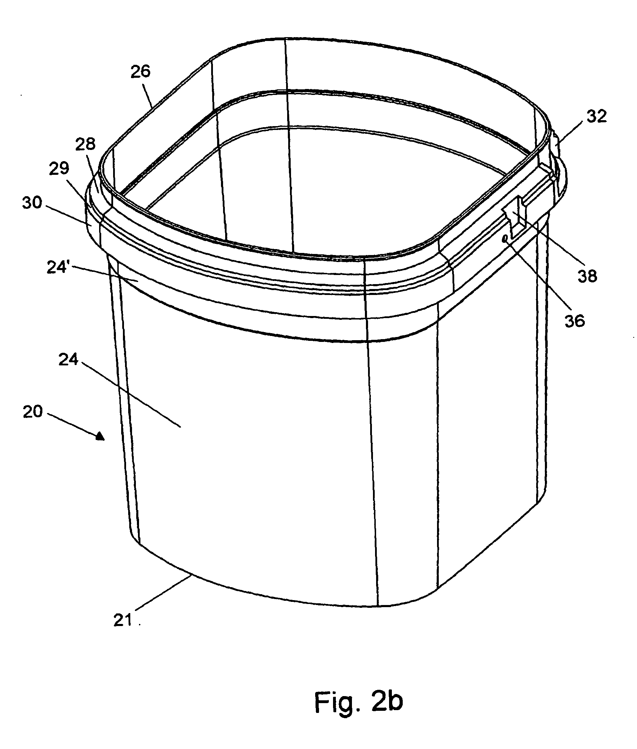

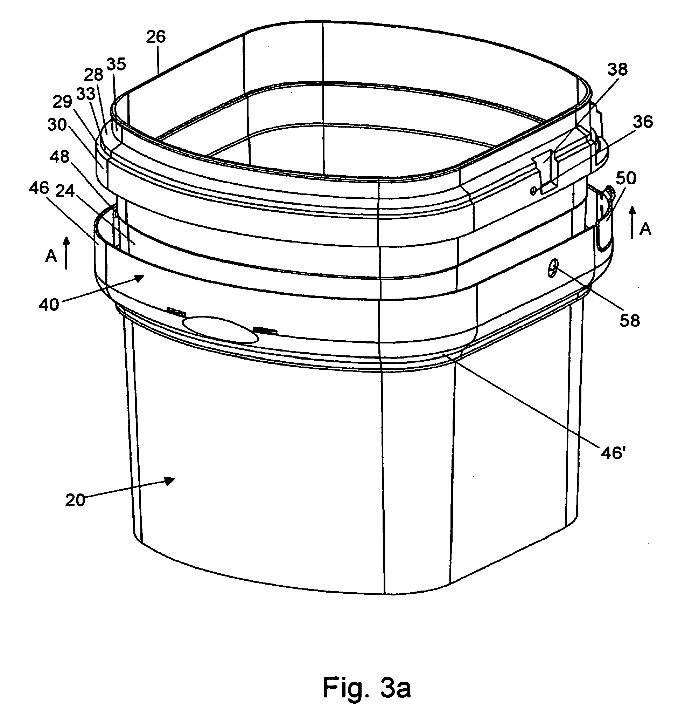

Reference is now made to figures 2a and 2b, where the separate collar 40 and the container 20 that form the assembly according to the invention are shown separately. Those two pieces are preferably manufactured simultaneously by injection moulding in a moulding tool that comprises two separate cavities, wherein the cavity for manufacturing the collar 40 encloses the cavity for manufacturing the container 20. During the discharge from the mould as such, the collar 40 may, if the injection moulding tool is constructed suitably, be mounted automatically around the container 20 by mutual displacement of the two injection-moulded pieces, as shown in figures 3a and 3b from where it will appear that the collar 40 is shifted in the direction of the arrow A until it snap-engages with the skirt on the container 20, as will be described in further detail below. As will also be described in further detail, the container 20 is preferably configured such that, without the collar 40, it can be used for storing various products, the container 20 exhibiting, in itself, strength properties other than when the container is assembled with the collar 40.

As will appear from Figure 2b, the container 20 is defined by the above-mentioned peripherally extending wall 24 with the bottom 21 and the free edge 26. Additionally the container 20 has a skirt in the form of a wall 30 which is arranged at a distance from the wall 24 and being connected to the wall 24 via round-going edges 28, 29, 33. The wall 24 is also connected to the wall 30 via transversal ribs 31, as is shown most clearly in Figure 3b, whereby the wall 30 may impart a certain degree of rigidity to the container 20 in the area at the mouthing of the container 20, ie at the free edge 26. It will appear that a passage-shaped recess is defined between the wall 24 and the wall 30 of the skirt, which is in this case divided into a number of individual recesses 25 by the ribs 31.

Preferably, the wall 30 of the container 20 is also provided with two opposed through-going openings 36 that are, as outlined in Figure 1b, preferably arranged to coincide with the line S, ie immediately above the point of gravity of the container 20. If the container 20 is used without the above-referenced collar 40, the openings 36 enable mounting of a handle (not shown) with hinge pins that are introduced into a respective opening 36 to extend into the space between the wall 30 and the peripherally extending wall 24. Moreover, the wall 30 has two opposed recesses 38 or openings that provide space for hinge pins T on a handle 45 in a scenario where the collar 40 is used.

When a lid is arranged on the free edge 26 of the container 20 as shown in Figure 1a, the lower edge of the outer wall 9 of the lid will rest in abutment on or approximately in abutment on the peripherally extending edge 29 and will be flush with the wall 30. To facilitate removal of the lid when the lid 5 is used in combination with the container 20 without the collar 40, the wall 30 is preferably provided with a recess 32 that enables the user to apply an upward pressure to the lower edge of the outer wall 9.

Now, the collar 40 will be described in further detail with reference to Figure 2a. The collar 40 appears as a stable and relatively rigid frame. The collar 40 comprises the wall 46 that has, at the bottom, an inwardly oriented portion 46' that extends into another peripherally extending wall 52 that projects interiorly of the collar 40 at a distance from the wall 46. Moreover, the wall 52 is preferably connected to the wall 46 by means of transversal ribs 60. On its inner side at its upper edge 46", the wall 46 is preferably provided with protruding ribs 48 by which the collar 40 can be caused to snap-engage with the peripherally extending edge 29 of the container when the collar 40 is shifted along the arrow A in Figure 3a to the final position shown in Figures 1a and 1b in order to thereby fix the collar 40 in relation to the container 20. Alternatively or as a supplement the collar 40 may be fixed via a powerful frictional engagement between the wall 52 and the outer side of the peripherally extending wall 24 of the container in the area 24' (see Figure 2b). When the collar 40 has been taken to this final position, the wall 46 extends approximately in parallel with the wall 30 on the container 20, preferably in engagement against the outer surface of that wall 30. It will further appear that the collar 40 comprises the above-mentioned strip-shaped portion 50 which is connected to the wall 46 via easily tearable connecting bridges 53 and having a seize flap 54 by which the user is able to tear of the portion 50.

When the collar 40 is fixed as described, closure of the downwardly open recess 24 of the container is provided which is usually established as a consequence of the structure of the skirt of the container 20 when the container 20 is manufactured in an injection moulding process. The collar does not only give rise to a bracing of the container 20 in the area at the mouthing, but also permits a blocking of that recess, which is in demand by some consumers since the relatively thin and sharp ribs 31 can be perceived as unpleasant, if the user unintentionally introduces his fingers behind the wall 30. In some cases the container 20 can be manufactured such that the recess 24 is upwardly open and in that case the collar 40 can be applied in a reverse position in relation to Figure 2a, ie where the peripherally extending wall 52 faces upwards, whereby the protrusions 48 are caused to seize a lower edge on the skirt of the container 20.

## Claims

1. A two-part receptacle comprising a plastics container (20) with a bottom (21) and an peripheral side wall (24) that defines the axial expanse (S) of the container (20) which is provided, opposite the bottom (21), with a mouth and an external skirt, and a separate round-going plastic collar (40) for fixing exteriorly on the container (20) at the mouth, said skirt comprising a peripheral wall (30) being connected to the sidewall (24) and defining a number of recesses (25) that are open in the axial direction of the container; and said collar (40) comprising a wall (46') configured for blocking said recesses when the collar (40) is fixed exteriorly on the container (20).

2. A two-part receptacle according to claim 1, **characterised in that** the collar (40) also comprises a round-going wall (46) configured for extending essentially along the axial expanse (S) of the container when the collar (40) is fixed to the container (20).

3. A two-part receptacle according to claim 1 or 2, **characterised in that** the peripherally extending wall (30) of the skirt comprises means (36) for securing a handle (45).

4. A two-part receptacle according to any one of the preceding claims, **characterised in that** the collar (40) comprises means (58) for securing a handle (45).

5. A two-part receptacle according to the claim 4 when dependent on claim 3, **characterised in that** said means (58) of the collar (40) are shifted in the peripherally oriented direction of the sidewall (24) relative to said means (36) of the skirt.

6. A two-part receptacle according to claim 4 or 5, **characterised in that** the collar (40) is connected integrally to a handle (45).

7. A two-part receptacle according to any one of claims 3-5, **characterised in that** the means (36, 58) for securing a handle are openings for receiving a pin on the handle.

8. A two-part receptacle according to claim 2 or any claim dependent thereon, wherein the peripherally extending sidewall (24) of the container (20) has a free edge (26) configured for securing a lid (5) with a skirt (9) by means of snap-engagement, **characterised in that** the peripherally extending wall (46) of the collar (40) comprises a longitudinally extended strip-shaped portion (50) configured for being removable by connecting bridges (53) being torn apart.

9. A two-part receptacle according to claim 2 or any claim dependent thereon, **characterised in that** the collar (40) comprises an additional round-going wall (52), said two round-going walls (46, 52) extending approximately in parallel with each other and being connected to each other; said additional round-going wall (52) being configured for abutting closely against the peripherally extending sidewall (24) of the container, when the collar is fixed to the container (20).

10. A two-part receptacle according to any one of the preceding claims, **characterised in that** the collar (40) is configured for being fixed on the container (20) by a snap-engagement or a frictional engagement.

11. A two-part receptacle according to claim 10, **characterised in that** the collar (40) comprises protrusions (48) configured for co-operating with a peripherally extending edge (29) on the container (20) for establishing said snap-engagement.

12. A method of moulding a two-part receptacle consisting of a container (20) and a separate round-going collar (40) intended for being fixed around the container (20) according to any of the preceding claims, **characterised in that** a single injection-moulding mould is used that features a cavity for the collar (40) and a separate cavity for the container (20); and that, in connection with the discharge from the mould, the collar (40) is caused to engage with the container (20) by a mutual relative movement.

## Patentansprüche

1. Ein zweiteiliges Gefäß, das einen Kunststoffbehälter (20) mit einem Boden (21) und einer die axiale Ausdehnung (S) des Behälters (20) definierenden peripheren Seitenwand (24), welcher Behälter, dem Boden (21) gegenüberliegend, mit einer Öffnung und einem Außenrand versehen ist, und einen einzelnen umlaufenden Kunststoffkragen (40) zur äußeren Fixierung am Behälter (20) an der Öffnung umfasst, welcher Rand eine mit der Seitenwand (24) verbundene periphere Wand (30) umfasst und eine Anzahl von Aussparungen (25) definiert, welche in der axialen Richtung des Behälters offen sind; und welcher Kragen (40) eine Wand (46') umfasst, die zur Blockierung der Aussparungen eingerichtet ist, wenn der Kragen (40) am Behälter (20) außen fixiert ist.

2. Ein zweiteiliges Gefäß nach Anspruch 1, **dadurch gekennzeichnet, dass** der Kragen (40) außerdem eine umlaufende Wand (46) umfasst, welche dazu eingerichtet ist, sich im Wesentlichen entlang der axialen Ausdehnung (S) des Behälters zu erstrecken, wenn der Kragen (40) am Behälter fixiert ist.

3. Ein zweiteiliges Gefäß nach Anspruch 1 oder 2,
**dadurch gekennzeichnet, dass** die sich peripher erstreckende Wand (30) des Randes Mittel (36) zur Sicherung eines Griffs (45) umfasst.

4. Ein zweiteiliges Gefäß nach irgendeinem der vorhergehenden Ansprüche,
**dadurch gekennzeichnet, dass** der Kragen (40) Mittel (58) zur Sicherung eines Griffs (45) umfasst.

5. Ein zweiteiliges Gefäß nach Anspruch 4, wenn abhängig von Anspruch 3,
**dadurch gekennzeichnet, dass** die Mittel (58) des Kragens (40) im Verhältnis zu den Mitteln (36) des Randes in eine peripher ausgerichtete Richtung der Seitenwand (24) verschoben sind.

6. Ein zweiteiliges Gefäß nach Anspruch 4 oder 5,
**dadurch gekennzeichnet, dass** der Kragen (40) mit einem Griff (45) integrierend verbunden ist.

7. Ein zweiteiliges Gefäß nach irgendeinem der Ansprüche 3-5,
**dadurch gekennzeichnet, dass** die Mittel (36, 58) zur Sicherung eines Griffs Öffnungen zur Aufnahme eines Bolzens am Griff sind.

8. Ein zweiteiliges Gefäß nach Anspruch 2 oder nach irgendeinem der Ansprüche abhängig davon, wo die sich peripher erstreckende Seitenwand (24) des Behälters (20) eine freie Kante (26) aufweist, die zur Sicherung eines Deckels (5) mit einem Rand (9) mittels Schnappeingriffs eingerichtet ist, **dadurch gekennzeichnet, dass** die sich peripher erstreckende Wand (46) des Kragens (40) einen langgestreckten bandförmigen Teil umfasst, der dazu eingerichtet ist, dass er durch Verbindung von Brücken (53), welche auseinander gerissen werden, abnehmbar ist.

9. Ein zweiteiliges Gefäß nach Anspruch 2 oder irgendeinem der Ansprüche abhängig davon, **dadurch gekennzeichnet, dass** der Kragen (40) eine zusätzliche umlaufende Wand (52) umfasst, welche beiden umlaufenden Wände (46,52) sich etwa parallel zu einander erstrecken und miteinander verbunden sind; welche zusätzliche umlaufende Wand (52) zur nahen Anlage an der sich peripher erstreckenden Seitenwand (24) des Behälters eingerichtet ist, wenn der Kragen am Behälter (20) fixiert ist.

10. Ein zweiteiliges Gefäß nach irgendeinem der vorhergehenden Ansprüche, **dadurch gekennzeichnet, dass** der Kragen (40) mittels eines Schnappeingriffs oder eines Reibeingriffs zur Fixierung am Behälter (20) eingerichtet ist.

11. Ein zweiteiliges Gefäß nach Anspruch 10, **dadurch gekennzeichnet, dass** der Kragen (40) Vorsprünge (48) umfasst, die zum Zusammenwirken mit einer sich peripher erstreckenden Kante (29) am Behälter (20) zur Etablierung des Schnappeingriffs eingerichtet sind.

12. Ein Verfahren zum Gießen eines zweiteiligen Gefäßes, das aus einem Behälter (20) und einem einzelnen umlaufenden Kragen (40) besteht, welcher nach irgendeinem der vorhergehenden Ansprüche dazu bestimmt ist, um den Behälter fixiert zu werden, **dadurch gekennzeichnet, dass** eine einzelne Spritzgussform verwendet wird, die einen Hohlraum für den Kragen (40) und einen einzelnen Hohlraum für den Behälter (20) aufweist; und dass der Kragen (40) in Verbindung mit dem Ausstoß aus der Gussform dazu veranlasst wird, mit dem Behälter (20) mittels einer gegen-seitigen Relativbewegung einzurasten.

## Revendications

1. Récipient en deux parties comprenant un récipient en matière plastique (20) avec un fond (21) et une paroi latérale périphérique (24) qui définit l'étendue axiale (S) du récipient (20) qui est disposée de l'autre côté du fond (21), avec une ouverture et une jupe extérieure, et un collier arrondi en matière plastique (40) séparé, à fixer extérieurement sur le récipient (20) au niveau de l'ouverture, ladite jupe comprenant une paroi périphérique (30) qui est raccordée à la paroi latérale (24) et délimite un certain nombre d'évidements (25) ouverts dans la direction axiale du récipient et ledit collier (40) comprenant une paroi (46') configurée pour bloquer lesdits évidements quand le collier (40) est fixé extérieurement sur le récipient (20).

2. Récipient en deux parties selon la revendication 1, **caractérisé en ce que** le collier (40) comprend aussi une paroi arrondie (46) configurée pour s'étendre sensiblement le long de l'étendue axiale (S) du récipient quand le collier (40) est fixé sur le récipient (20).

3. Récipient en deux parties selon la revendication 1 ou 2, **caractérisé en ce que** la paroi à extension périphérique (30) de la jupe comprend des moyens (36) pour fixer une poignée (45).

4. Récipient en deux parties selon l'une quelconque des revendications précédentes, **caractérisé en ce que** le collier (40) comprend des moyens (58) pour fixer une poignée (45).

5. Récipient en deux parties selon la revendication 4 quand elle est subordonnée à la revendication 3, **caractérisé en ce que** lesdits moyens (58) du collier (40) sont décalés dans la direction de l'orientation périphérique de la paroi latérale (24) par rapport auxdits moyens (36) de la jupe.

6. Récipient en deux parties selon la revendication 4 ou 5, **caractérisé en ce que** le collier (40) est raccordé d'une seule pièce à une poignée (45).

7. Récipient en deux parties selon l'une quelconque des revendications 3 à 5, **caractérisé en ce que** les moyens (36, 58) pour fixer une poignée sont des ouvertures pour recevoir un axe présent sur la poignée.

8. Récipient en deux parties selon la revendication 2 ou l'une quelconque des revendications qui lui sont subordonnées, dans lequel la paroi latérale à extension périphérique (24) du récipient (20) comporte un bord libre (26) configuré pour fixer un couvercle (5) avec une jupe (9) au moyen d'un enclenchement élastique, **caractérisé en ce que** la paroi à extension périphérique (46) du collier (40) comprend une partie en forme de bande (50) s'étendant longitudinalement et configurée pour qu'on puisse l'enlever en déchirant les pontages de raccord (53).

9. Récipient en deux parties selon la revendication 2 ou l'une quelconque des revendications qui lui sont subordonnées, **caractérisé en ce que** le collier (40) comprend une paroi arrondie supplémentaire (52), lesdites deux parois arrondies (46, 52) s'étendant à peu près parallèlement l'une à l'autre et étant raccordées l'une à l'autre, ladite paroi arrondie supplémentaire (52) étant configurée pour s'appuyer étroitement contre la paroi latérale à extension périphérique (24) du récipient quand le collier est fixé sur le récipient (20).

10. Récipient en deux parties selon l'une quelconque des revendications précédentes, **caractérisé en ce que** le collier (40) est configuré pour être fixé sur le récipient (20) par un enclenchement élastique ou un enclenchement par friction.

11. Récipient en deux parties selon la revendication 10, **caractérisé en ce que** le collier (40) comprend des protubérances (48) configurées pour concourir avec le bord à extension périphérique (29) sur le récipient (20) à l'établissement dudit enclenchement élastique.

12. Procédé de moulage d'un récipient en deux parties constitué d'un récipient (20) et d'un collier arrondi (40) séparé, conçu pour être fixé autour du récipient (20), selon l'une quelconque des revendications précédentes, **caractérisé en ce que** l'on utilise un seul moule de moulage par injection qui comporte une empreinte pour le collier (40) et une empreinte séparée pour le récipient (20) et **en ce que**, au moment où on les retire du moule, un mouvement des pièces l'une par rapport à l'autre fait s'enclencher le collier (40) avec le récipient (20).
